(19) Europäisches Patentamt
European Patent Office
Office européen des brevets

(11) **EP 4 180 466 A1**

(12) **EUROPEAN PATENT APPLICATION**

(43) Date of publication:
**17.05.2023 Bulletin 2023/20**

(21) Application number: **21306578.2**

(22) Date of filing: **12.11.2021**

(51) International Patent Classification (IPC):
***C08F 8/06*** *(2006.01)* ***C09J 133/06*** *(2006.01)*

(52) Cooperative Patent Classification (CPC):
(C-Sets available)
**C09J 133/066; C08F 8/06** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ARKEMA FRANCE**
**92700 Colombes (FR)**

(72) Inventors:
- **SAIJA, Leo-Mario**
  **42022 BORETTO (IT)**
- **LUGLI, Mario**
  **42022 BORETTO (IT)**
- **PREMOLI, Andrea**
  **42022 BORETTO (IT)**
- **PERINO, Luca**
  **42022 BORETTO (IT)**
- **FERRETTI, Simona**
  **42022 BORETTO (IT)**
- **CONTI, Silvia**
  **42022 BORETTO (IT)**
- **ORCESI, Manuela**
  **42022 BORETTO (IT)**

(74) Representative: **Arkema Patent**
**Arkema France**
**DRD-DPI**
**420, rue d'Estienne d'Orves**
**92705 Colombes Cedex (FR)**

(54) **AQUEOUS DISPERSION OF POLYMER PARTICLES AND USES THEREOF AS AN ADHESIVE COMPOSITION**

(57) The present invention relates to an adhesive composition comprising an aqueous dispersion of polymer particles which have been subjected to a post-polymerization treatment with an excess of peroxide. The invention also relates to a process for preparing the adhesive composition, to a process for increasing the adhesion of an adhesive composition, to a process for producing an adhesive article and to an adhesive article obtained with the adhesive composition.

EP 4 180 466 A1

(52) Cooperative Patent Classification (CPC): (Cont.)

C-Sets
**C08F 8/06, C08F 220/1808**

## Description

### FIELD OF THE INVENTION

The present invention relates to an adhesive composition comprising an aqueous dispersion of polymer particles which have been subjected to a post-polymerization treatment with an excess of peroxide. The invention also relates to a process for preparing the adhesive composition, to a process for increasing the adhesion of an adhesive composition, to a process for producing an adhesive article and to an adhesive article obtained with the adhesive composition.

### TECHNICAL BACKGROUND

The present invention relates to an aqueous dispersion which is particularly suited to be used as an adhesive composition, in particular a pressure-sensitive adhesive (PSA) composition. Such uses include, for example, the production of adhesive articles, such as an adhesive label, an adhesive tape or an adhesive film.

Adhesives may be in the form of a polymer solution in an organic solvent or an aqueous polymer dispersion obtained by emulsion polymerization. In view of environmental awareness and the pollution caused by organic solvents, there is a growing tendency of preferring water-based adhesives over solvent-based adhesives. However, the adhesive properties of water-based adhesives are not yet equal in every aspect to those obtained with solvent-based adhesives.

The cohesion of an adhesive is linked to the degree of crosslinking of the polymer coming from backbiting and polymer termination reactions, which take place during the radical polymerization process. This can be measured by the amount of insoluble matter in tetrahydrofuran (THF) named gel content. Adhesives with higher gel content usually show higher cohesion level.

Solventborne polymers are generally very largely unbranched and uncrosslinked and when coated onto substrates form very homogeneous films of adhesive in which the long polymer chains are able to interloop, leading to good balance between adhesion and cohesion. The production process of emulsion polymerization generally entails the formation of polymers having relatively high degrees of branching and of crosslinking (as measurable by the gel content) by comparison with solution polymerization. The filming of emulsion polymers forms heterogeneous films having microscopically visible interfaces, which are attributable to the dispersion particles; the overall effect of this is to impair the balance between adhesion and cohesion, by comparison with solvent-based polymers, and to impair the water resistance. Crosslinking or interlooping of polymer chains across the interfaces of the dispersion particles is greatly impaired, so making it difficult to improve the cohesion of PSAs based on emulsion polymers. There is therefore a desire for water-based adhesives with further-improved adhesive properties.

WO2019201696A1 discloses a PSA polymer composition to be used in industrial tape production where the gel content is modified by further crosslinking of ketonic groups on the polymer particles and dihydrazide group present in the water phase. According to the authors, the gel produced in this way should be more homogenous giving better adhesive performances.

US20190390091A1 obtains the same results by crosslinking the polymer particles with metals reacting with carboxylic groups present on the particles.

US9518199B2 discloses a PSA with a specific monomeric composition containing butyl acrylate, vinyl acetate and ethyl acrylate exhibiting good quick stick adhesion without affecting the PSA cohesion.

Tangpakdee et al (Rubber Chem.Technol. 1998, 71, 795-802) disclose the treatment of a natural rubber with potassium persulfate to lower the molecular weight of the polymer chain.

Barandian et al. describes the effect of the redox treatment based on organic hydroxyperoxide and ascorbic acid, showing the possibility to modify the microstructure of polymer particles, but no suggestion or indication if and how these post polymerization techniques could be applied to improve properties and particularly the applicative properties of a pressure sensitive adhesive.

In the Handbook of Polymer Reaction Engineering, (2005 WILEY-VCH Verlag GmbH & Co. KGaA, Weinheim ISBN: 3-527-31014-2, page 759-762), the polymer degradation by different mechanisms is well described.

EP1342762B1 shows a process that can be used in high solids PSA dispersions in order to remove residual monomers and volatiles, which usually require high amounts of energy, time and specific expensive equipment.

Surprisingly it has been discovered that a specific post-polymerization treatment with an excess of peroxide combined with a low amount of chain-transfer agent during the emulsion polymerization leads to a polymer having a specific microstructure. The dispersion of polymer particles of the invention has improved adhesive properties, in particular an excellent compromise between adhesion and cohesion, even in the presence of a tackifier resin. In this way, products with high instantaneous adhesion on stainless steel, high SAFT (shear adhesion failure temperature) and shear resistance can be obtained. Moreover, by means of the same invention it is possible to obtain polymer dispersions with a low content of VOC. The invention does not require the use of a specific crosslinking system like metals or ketonic group, or ethyl acrylate. Furthermore, the polymer dispersion of the invention can be obtained with a process that does not require a

high amount of energy nor a specific equipment since it can be simply be carried out in the same equipment as that used for the polymerization.

## SUMMARY OF THE INVENTION

A first object of the present invention is an adhesive composition comprising an aqueous dispersion of polymer particles obtained by emulsion polymerization of a monomeric composition comprising:

a) ethylenically unsaturated monomers;
b) at most 0.2% by weight of chain transfer agent based on the total weight of the ethylenically unsaturated monomers; and
c) a surfactant; and
d) an initiator;

wherein the polymer particles have been subjected to a post-polymerization treatment with a peroxide in an amount of at least 0.008 meq effective peroxide/g of polymer.

Another object of the present invention is a process for the preparation of an adhesive composition comprising the following steps:

i) preparation of an aqueous dispersion of polymer particles by emulsion polymerization of a monomeric composition comprising

a) ethylenically unsaturated monomers;
b) at most 0.2% by weight of chain transfer agent based on the total weight of the ethylenically unsaturated monomers; and
c) a surfactant; and
d) an initiator;

ii) adding a peroxide to the aqueous dispersion of polymer particles obtained in step i) in an amount of at least 0.008 meq effective peroxide/g of polymer present in the aqueous dispersion of polymer particles.

Another object of the present invention is a process for increasing the adhesion of an adhesive composition wherein the process comprises a post-polymerization treatment of an aqueous dispersion of polymer particles with a peroxide in an amount of at least 0.008 meq effective peroxide/g of polymer present in the aqueous dispersion of polymer particles.

Yet another object of the present invention is a process for producing an adhesive article, the process comprising coating a substrate with the adhesive composition of the invention.

Another object of the present invention is an adhesive article comprising a substrate coated with the adhesive composition of the invention, in particular the adhesive article is an adhesive label, an adhesive tape or an adhesive film.

## DETAILED DESCRIPTION

### Definitions

As used herein, the term "(meth)acrylate" means methacrylate or acrylate. In one embodiment, the (meth)acrylate is an acrylate. In another embodiment the (meth)acrylate is a methacrylate.

As used herein, the term "aqueous dispersion" means a polyphasic system having a dispersed organic phase and a continuous aqueous phase.

As used herein, the term "substantially free of organic solvents" means less than 2%, preferably less than 1%, more preferable 0% by weight of organic solvent based on the weight of the aqueous phase.

As used herein, the term "aliphatic" refers to a monomer that does not comprise an aromatic group. Aliphatic monomers may be saturated or unsaturated, linear or branched, cyclic or acyclic.

As used herein the term "ethylenically unsaturated" means a monomer that comprises a polymerizable carbon-carbon double bond. A polymerizable carbon-carbon double bond is a carbon-carbon double bond that can react with another carbon-carbon double bond in a polymerization reaction. A polymerizable carbon-carbon double bond is generally comprised in an acryloyl ($-C(=O)-CH=CH_2$), methacryloyl ($-C(=O)-C(CH_3)=CH_2$) or vinyl ($-CH=CH_2$) group. The carbon-carbon double bonds of a phenyl ring are not considered as polymerizable carbon-carbon double bonds.

As used herein, the term "vinyl aromatic monomer" refers to a monomer that contains a carbon-carbon double

bond in alpha position to an optionally substituted aromatic ring. Examples of aromatic rings include optionally substituted rings selected from benzene, toluene, xylene, biphenyl, indene, naphthalene, anthracene and mixtures thereof.

As used herein the term "acidic group" means a group that can be anionised through loss of a proton. For example, a carboxylic acid functional group may form a carboxylate anion under basic conditions.

As used herein the term "phosphorus-based acid monomers" means a monomer comprising an acidic group that comprises a phosphorus atom.

As used herein the term "sulfur-based acid monomers" means a monomer comprising an acidic group that comprises a sulfur atom.

As used herein, the term "silane group" means a group comprising a carbon-silicon bond (C-Si). The silane group may further comprise a silicon-oxygen bond (Si-O).

Adhesive composition

The invention relates to an adhesive composition. An adhesive composition is a composition that is suitable for obtaining an adhesive.

The adhesive composition of the invention may be a pressure-sensitive adhesive (PSA) composition. A PSA (pressure-sensitive adhesive) is a viscoelastic adhesive having a permanently tacky surface in the dry state at room temperature. Adhesion to substrates is accomplished immediately by gentle applied pressure and does not require an activation step (for example heating or wetting with water).

The adhesive composition of the invention comprises an aqueous dispersion of polymer particles as described below.

*Aqueous dispersion of polymer particles*

The adhesive composition of the invention is in the form of an aqueous dispersion. The aqueous dispersion comprises polymer particles dispersed in an aqueous phase.

The aqueous phase is a liquid comprising water. Said liquid may further comprise organic solvents, such as, for example, ethanol. However, the aqueous phase is preferably substantially free of organic solvents.

The organic phase may be a monomer phase, a polymer phase or a mixture thereof. Said organic phase may further comprise other liquid, solid or semi-solid components, such as surfactants, plasticizers, chain transfer agents and buffering agents. A dispersion having a liquid organic phase may be referred to as an emulsion. A dispersion having a solid or semi-solid organic phase may be referred to as a colloidal suspension. In the field of polymers, such colloidal suspensions are also inaccurately referred to as emulsions, and the process for preparing them is called emulsion polymerization. Another term commonly used for characterizing an aqueous dispersion of polymer particles is "latex".

The solids content of the aqueous dispersion may be in the range of 30 to 70% by weight, in particular 40 to 68%, more particularly 50 to 65% by weight.

The polymer particles may exhibit a volume average particle size of 50 to 1000 nm, in particular 60 to 500 nm, more particularly 60 to 400 nm. The volume average particle size may be determined by dynamic light scattering or laser diffraction.

According to a particular embodiment, the polymer particles may exhibit a bimodal or polymodal particle size distribution. Such a distribution may advantageously be used when the solids content of the aqueous dispersion is higher than 60% in order to reduce the viscosity of the aqueous dispersion. For example, it is possible to create a new generation of particles by adding a seed. Further conditions for a polymodal distribution can be found in WO 02/092637.

The polymer particles may exhibit a glass transition temperature (Tg) of -65 to -10°C, in particular -50 to -20°C, more particularly -48 to -25°C. The Tg may be determined by DSC according to the method described herein.

In one embodiment, the polymer particles have a gel content of 50 to 90%, in particular 65 to 85%, more particularly 70 to 85%. The gel content may be determined according to the method described herein.

The polymer particles are obtained by emulsion polymerization of a monomeric composition and subsequent post-polymerization treatment with a peroxide.

Any type of standard emulsion polymerization process may be used to obtain the polymer particles. For example, a pre-emulsified monomeric composition comprising ethylenically unsaturated monomers may be added to an aqueous solution comprising an initiator as detailed below. The post-polymerization treatment is also detailed below.

*Post-polymerization treatment*

The polymer particles of the present invention have been subjected to a post-polymerization treatment with a peroxide. A post-polymerization treatment is refers to a treatment that is carried out after the polymer particles have been formed by emulsion polymerization. Without wishing to be bound by theory, it is believed that the post-polymerization

treatment of the invention leads to a change of structure of the polymer particles. In particular, the post-polymerization treatment may generate beta-scission reactions on the polymer particles. More particularly, the post-polymerization treatment may lead to shorter polymer chains and rearrangements. The change of structure of the polymer particles may lead to a decrease of branching and/or crosslinking in the polymer particles. The change of structure of the polymer particles may lead to a decrease of the gel content of the polymer particles compared to the gel content of the polymer particles before the post-polymerization treatment. The change of structure of the polymer particles may lead to an increase of the weight average molecular weight (Mw) of the THF soluble polymer fraction present in the polymer particles compared to that before the post-polymerization treatment.

The amount of peroxide used in the post-polymerization treatment of the invention may be higher than that used in the conventional post-polymerization treatments known in the art, such as post-polymerization treatments with a peroxide for reducing the content of residual monomers. The polymer particles of the present invention are subjected to a post-polymerization treatment with at least 0.008 meq effective peroxide/g of polymer. Generally, the conventional post-polymerization treatments for reducing the content of residual monomers are carried out with 0 meq effective peroxide/g of polymer since the peroxide is in the presence of an excess of a reducing agent.

As used herein the term "effective peroxide" means a peroxide which is able to effectively react with the polymer particles, in particular a peroxide which has not reacted with other components that may be present in the aqueous dispersion. Reducing agents may optionally be added in the post-polymerization treatment as detailed below. If the aqueous dispersion comprises a reducing agent, the number of equivalents of peroxide that react with the reducing agent are not considered as effective peroxide since they are not able to react with the polymer. A peroxide in the presence of an excess of a reducing agent is therefore not considered as an effective peroxide.

The number of equivalents of effective peroxide corresponds to the total number of equivalents of peroxide used during the post-polymerization treatment minus the number of equivalents of reducing agent that may optionally be present during the post-polymerization treatment.

The total number of equivalents of peroxide used during the post-polymerization treatment is calculated by dividing the amount by weight of peroxide used in the post-polymerization treatment by its equivalent weight. The equivalent weight of a peroxide corresponds to its molecular weight divided by the variation of the oxidation number of each reactive oxygen atom. A peroxide has two reactive oxygen atoms per molecule and after the post-polymerization treatment, the oxidation number of each oxygen varies from -1 to -2. Accordingly, the equivalent weight of a peroxide is its molecular weight divided by 2.

The number of equivalents of reducing agent that may be present during the post-polymerization treatment is calculated by dividing the amount by weight of reducing agent used in the post-polymerization treatment by its equivalent weight. The equivalent weight of a reducing agent corresponds to its molecular weight divided by the variation of the oxidation number of each atom reacting with the peroxide, going from their original oxidation number to the highest one possible.

For example, sodium metabisulfite contains two reactive sulphur atoms per molecule and after reacting with the peroxide, the oxidation number of one sulphur atoms varies from +3 to +6 and the oxidation number of the other sulphur atoms varies from +5 to +6. Accordingly, the equivalent weight of sodium metabisulfite is its molecular weight divided by 4.

The amount of peroxide used in the post-polymerization treatment may be at least 0.010, at least 0.015, at least 0.020, at least 0.025, at least 0.030, or at least 0.035, meq effective peroxide/g of polymer.

The amount of peroxide used in the post-polymerization treatment may be at most 1.000, at most 0.600, at most 0.500, at most 0.400, at most 0.350, at most 0.300, or at most 0.250, meq effective peroxide/g of polymer.

In particular, the amount of peroxide used in the post-polymerization treatment may be from 0.008 to 1.000, from 0.010 to 0.600, from 0.015 to 0.500, from 0.020 to 0.400, from 0.025 to 0.350, from 0.030 to 0.300 or from 0.035 to 0.250, meq effective peroxide/g of polymer.

The peroxide used in the post-polymerization treatment may be any peroxide known the art. A peroxide may be defined as a compound comprising an oxygen-oxygen single bond. The peroxide may be selected from a persulfate, hydrogen peroxide ($H_2O_2$), an organic hydroperoxide, a peracid, or a mixture thereof.

Examples of suitable persulfates include ammonium persulfate, potassium persulfate, sodium persulfate and mixtures thereof.

Examples of suitable organic peroxides include cumene hydroperoxide, t-butyl hydroperoxide, acetyl peroxide, benzoyl peroxide, lauroyl peroxide and mixtures thereof.

Examples of suitable peracids include peracetic acid, perbenzoic acid and mixtures thereof.

In particular, the peroxide used in the post-polymerization treatment may be selected from ammonium persulfate, potassium persulfate, sodium persulfate, hydrogen peroxide or a mixture thereof; more particularly ammonium persulfate or a mixture of ammonium persulfate and hydrogen peroxide.

The post-polymerization treatment may be carried out either:

- in the absence of a reducing agent; or
- in the presence of a reducing agent and the equivalent ratio between the peroxide and the reducing agent is at least 2.0 in particular at least 2.5, more particularly at least 3.0.

In particular, the reducing agent is selected from alkali metal salts of sulfurous acid, such as sodium sulfite or sodium hydrogensulfite; alkali metal salts of disulfurous acid such as sodium metabisulfite; bisulfite addition compounds of aliphatic aldehydes and ketones, such as acetone bisulfite; hydroxymethanesulfinic acid and its salts; sulfinic acid derivatives like Bruggolite FF6 and FF7, thiosulfate salts such a sodium thiosulfate; tartaric acid or a salt thereof, ascorbic acid or a salt thereof; and mixtures thereof.

The post-polymerization treatment may be carried out at a temperature of at least 60°C, in particular at least 70°C, more particularly at least 80°C. If the post-polymerization treatment is carried out in the presence of a reducing agent, the temperature during the post-polymerization treatment may be at least 30°C, in particular at least 40°C, more particularly at least 50°C.

The post-polymerization treatment may be carried out until at least 80% or at least 85% of the peroxide is decomposed. The decomposition time of the peroxide may be estimated based on the rate constant of decomposition of the peroxide at a given temperature as described in "Polymer Handbook", Eds. Brandrup, J; Immergut, E.H.; Grulke, E.A., 3th Edition, John Wiley, New York, 1999, II/2-69. The decomposition half-time ($t_{1/2}$) of a peroxide corresponds to the time required to reduce the original peroxide content of a solution by 50%, at a given temperature and pH. The decomposition ($t_{1/2}$) is related to the rate constant of decomposition ($k_d$) as follows:

$$t_{1/2} = 0.693 \frac{1}{k_d}$$

<u>*Ethvlenicallv unsaturated monomers*</u>

The polymer particles of the present invention are based on ethylenically unsaturated monomers. Accordingly, the polymer particles are obtained from a monomeric composition comprising ethylenically unsaturated monomers as defined below. In other words, the polymer particles comprise polymerized units derived from ethylenically unsaturated monomers.

The monomeric composition may comprise monomer a). Monomer a) is a C1-C12 alkyl (meth)acrylate. Monomer a) may be a mixture of C1-C12 alkyl (meth)acrylates. As used herein, the term "C1-C12 alkyl (meth)acrylate" means an alkyl ester of (meth)acrylic acid wherein the alkyl bears from 1 to 12 carbon atoms.

Monomer a) may be selected from methyl methacrylate, ethyl (meth)acrylate, propyl (meth)acrylate, n-butyl (meth)acrylate, 2-ethylhexyl (meth)acrylate, 2-octyl (meth)acrylate, isooctyl (meth)acrylate, nonyl (meth)acrylate, decyl (meth)acrylate, 2-propylheptyl (meth)acrylate, lauryl (meth)acrylate or a mixture thereof; in particular selected from n-butyl acrylate, 2-ethylhexyl acrylate, 2-octyl acrylate, isooctyl acrylate, nonyl (meth)acrylate, decyl (meth)acrylate, 2-propylheptyl (meth)acrylate or a mixture thereof; more particularly selected from n-butyl acrylate, 2-ethylhexyl acrylate or a mixture thereof.

The total amount of monomer a) in the monomeric composition may be at least 60%, at least 65%, at least 70%, at least 75% or at least 80%, by weight based on the total weight of the ethylenically unsaturated monomers. In one embodiment, the total amount of monomer a) in the monomeric composition may be from 60 to 95%, from 65 to 95%, from 70 to 90%; from 75 to 90% or from 80 to 90%, by weight based on the total weight of the ethylenically unsaturated monomers.

The total amount of C4-C12 alkyl (meth)acrylate in monomer a) may be at least 60%, at least 65%, at least 70%, at least 75% or at least 80%, by weight based on the total weight of monomer a). In one embodiment, the total amount of C4-C12 alkyl (meth) acrylate in monomer a) may be from 60 to 95%, from 65 to 95%, from 70 to 95%; from 70 to 90%; from 75 to 90% or from 80 to 90%, by weight based on the total weight of monomer a).

The monomeric composition may comprise monomer b). Monomer b) is a vinyl aromatic monomer. Monomer b) may be a mixture of a vinyl aromatic monomers.

Monomer b) may be selected from styrene, alpha-methylstyrene, tert-butylstyrene, ortho-, meta-, and para-methylstyrene, ortho-, meta- and para-ethylstyrene, o-methyl-p-isopropylstyrene, p-chlorostyrene, p-bromostyrene, o,p-dichlorostyrene, o,p-dibromostyrene, ortho-, meta- and paramethoxystyrene, optionally substituted indenes, optionally substituted vinylnaphthalenes, acenaphthylene, diphenylethylene, vinyl anthracene or mixtures thereof.

In particular, monomer b) is styrene.

The monomeric composition may comprise from 0 to 20%, from 0.1 to 20%, from 1 to 18%, from 2 to 15% or from 4 to 12%, by weight of monomer b) based on the total weight of the ethylenically unsaturated monomers.

In one embodiment, the monomeric composition may be substantially free of monomer b). In particular, the

monomeric composition may comprise less than 1%, less than 0.5%, less than 0.1 % or even 0% by weight, of monomer b) based on the total weight of the ethylenically unsaturated monomers. For example, the monomeric composition may comprise from 0 to less than 1%, from 0 to 0.5%, from 0 to 0.1%, or even 0% by weight of monomer b) based on the total weight of the ethylenically unsaturated monomers.

In another embodiment, the monomeric composition may comprise at least 1%, at least 2%, at least 3%, at least 4%, at least 5%, at least 6%, at least 7%, at least 8%, at least 9%, or at least 10%, by weight of monomer b) based on the total weight of the ethylenically unsaturated monomers. For example, the monomeric composition may comprise from 1 to 20%, from 2% to 18% or from 4% to 15%, by weight of monomer b) based on the total weight of the ethylenically unsaturated monomers. Alternatively, the monomeric composition may comprise from 1 to 10%, from 2% to 7% or from 2.5% to 5%, by weight of monomer b) based on the total weight of the ethylenically unsaturated monomers.

The monomeric composition may comprise monomer c). Monomer c) is an ethylenically unsaturated monomer comprising an acidic group or a salt thereof. Monomer c) may be a mixture of ethylenically unsaturated monomers comprising an acidic group or a salt thereof.

In one embodiment, monomer c) may be selected from C3-C10 mono- or dicarboxylic acid monomers, phosphorous-based acid monomers, sulfur-based acid monomers, salts thereof or mixtures thereof.

In particular, monomer c) comprises an acidic group selected from a carboxylic acid (-COOH) group, a carboxylate (-COO-) group, a phosphonic acid ($-P(=O)(OH)_2$) group, a phosphonate ($-P(=O)(OR)_2$) group, a sulfonic acid ($-S(=O)_2OH$) group, a sulfonate ($-S(=O)_2OR$) group, a phosphate ($-O-P(=O)(OR)_2$) group , wherein each R is independently a counterion, a hydrogen atom, or an optionally substituted hydrocarbyl.

Monomer c) may comprise 2 to 30 carbon atoms and a group selected from acryloyl ($-C(=O)-CH=CH_2$), methacryloyl ($-C(=O)-C(CH_3)=CH_2$) or vinyl ($-CH=CH_2$).

In particular, monomer c) may be selected from (meth)acrylic acid, 2-chloroacrylic acid, vinyl phosphonic acid, vinyl sulfonic acid, p-styrene carboxylic acid, p-styrene sulfonic acid, itaconic acid, maleic acid, maleic anhydride, tetrahydrophthalic acid, tetrahydrophthalic anhydride, fumaric acid, crotonic acid, 3-butenoic acid, mesaconic acid, citraconic acid, 2-carboxyethyl acrylate, sodium 2-acrylamido-2-methyl propane sulfonate, sodium vinyl sulfonate, sodium (meth)allyl sulfonate, sodium 1-allyloxy-2-hydroxypropane sulfonate, a phosphate ester of alkyl (meth)acrylate, a phosphate ester of alkyl (meth)acrylamide, a phosphate ester of alkyl crotonate, a phosphate ester of alkyl maleate, a phosphate ester of alkyl fumarate, a phosphate diester of alkyl (meth)acrylate, a phosphate diester of alkyl crotonate, vinyl phosphate, (meth)allyl phosphate, a phosphate ester of polypropylene glycol mono(meth)acrylate, a phosphate ester of polyethylene glycol mono(meth)acrylate, a phosphate ester of polyoxyethylene allyl ether or mixtures thereof.

More particularly, monomer c) is acrylic acid.

The monomeric composition may comprise 0 to 10%, in particular 0.1 to 10%, more particularly 0.1 to 5%, even more particularly 0.5 to 3%, by weight of monomer c) based on the total weight of the ethylenically unsaturated monomers.

The monomeric composition may comprise monomer d). Monomer d) is a vinyl ester of a carboxylic acid. Monomer d) may be a mixture of vinyl esters of carboxylic acids. Monomer d) may be a vinyl ester of a C2-C20 carboxylic acid.

In particular, monomer d) may be selected from vinyl acetate, vinyl propionate, vinyl hexanoate, vinyl 2-ethylhexanoate, vinyl octanoate, vinyl pelargonate, vinyl laurate, vinyl stearate, vinyl esters of versatic acid or mixtures thereof.

More particularly, monomer d) may be vinyl acetate.

The monomeric composition may comprise 0 to 30%, in particular 1 to 30%, more particularly 2 to 20%, even more particularly 4 to 16%, by weight of monomer d) based on the total weight of the ethylenically unsaturated monomers.

The monomeric composition may comprise a monomer e). Monomer e) is different from monomers a), b), c) and d) as defined above. Monomer e) is a monomer bearing a functional group selected from hydroxy, epoxy, carbonyl and a nitrogen-containing functional group. Monomer e) may be a mixture of monomers bearing a functional group as defined above.

Monomer e) is capable of copolymerizing with monomers a), b), c), d) and e). Monomer e) may be an aliphatic ethylenically unsaturated monomer bearing a functional group as defined above. Monomer e) may comprise a ethylenically unsaturated group selected from acryloyl ($-C(=O)-CH=CH_2$), methacryloyl ($-C(=O)-C(CH_3)=CH_2$), vinyl ($-CH=CH_2$), crotyl ($-CH=CH(CH_3)$) or allyl ($-CH_2-CH=CH_2$) and a functional group selected from hydroxyl, ketone, aldehyde, acetoacetoxy, acetoacetamide, 1,1-dimethyl-3-oxobuyl (diacetone), glycidyl ether, amino ($-NH_2$), alkylamino or dialkylamino (-NHR or $-NR_2$ with R is alkyl), cyano (-CN) or a heterocycle with one or more nitrogen ring atoms.

In particular, monomer e) may be selected from 2-hydroxyethyl (meth)acrylate, 3-hydroxypropyl (meth)acrylate, 4-hydroxybutyl (meth)acrylate, hydroxybutenyl (meth)acrylate, glycidyl (meth)acrylate, acetoacetoxyethyl (meth)acrylate, acetoacetoxypropyl (meth)acrylate, acetoacetobutyl (meth)acrylate, 2,3-di(acetoacetoxy)propyl (meth)acrylate, diacetone (meth)acrylate, acetonyl (meth)acrylate, allyl acetoacetate, vinyl acetoacetate, methylvinylketone, ethylvinylketone, butylvinylketone, (meth)acroleine, crotonaldehyde, formylstyrene, (meth)acrylonitrile, (meth)acrylamide, N,N-dimethylacrylamide, diacetone acrylamide, N-methylol(meth)acrylamide, 2-aminoethyl (meth)acrylate, t-butyl aminoethyl methacrylate, dimethylaminoethyl methacrylate, diethylaminoethyl methacrylate, N,N-dimethylaminopropyl methacrylamide, 2-tbutylaminoethyl methacrylate, N,N-dimethylaminoethylacrylate, N-(2-methacryloyloxyethyl)ethylene urea and methacrylamidoethylethylene urea or mixtures thereof.

Preferably, monomer e) is a hydroxyalkyl (meth)acrylate, more preferably 2-hydroxyethyl (meth)acrylate.

The monomeric composition may comprise 0 to 10%, in particular 0.1 to 10%, more particularly 0.1 to 5%, even more particularly 0.5 to 3%, by weight of monomer e) based on the total weight of the ethylenically unsaturated monomers.

The monomeric composition may comprise monomer f). Monomer f) is a vinyl ether. Monomer f) may be a mixture of vinyl ethers.

In particular, monomer f) may be selected from vinyl methyl ether, vinyl ethyl ether, vinyl n-butyl ether, vinyl iso-butyl ether or mixtures thereof.

The monomeric composition may comprise 0 to 20%, in particular 0 to 15%, more particularly 0 to 10%, by weight of monomer f) based on the total weight of the ethylenically unsaturated monomers.

The monomeric composition may comprise monomer g). Monomer g) is a conjugated diene. Monomer g) may be a mixture of conjugated dienes.

In particular, monomer g) may be selected from butadiene, isoprene, pentadiene, chlorodiene or mixtures thereof.

The monomeric composition may comprise 0 to 20%, in particular 0 to 15%, more particularly 0 to 10%, by weight of monomer g) based on the total weight of the ethylenically unsaturated monomers.

The monomeric composition may comprise monomer h). Monomer h) is an alpha-olefin. Monomer h) may be a mixture of alpha-olefins.

In particular, monomer h) may be selected from ethylene, propene, 1-butene, isobutylene, diisobutylene, 1-nonene, 1-decene or mixtures thereof.

The monomeric composition may comprise 0 to 20%, in particular 0 to 15%, more particularly 0 to 10%, by weight of monomer h) based on the total weight of the ethylenically unsaturated monomers.

The monomeric composition may comprise monomer i). Monomer i) is a vinyl halide. Monomer i) may be a mixture of vinyl halides.

In particular, monomer i) may be selected from vinyl chloride, vinylidene chloride or mixtures thereof.

The monomeric composition may comprise 0 to 20%, in particular 0 to 15%, more particularly 0 to 10%, by weight of monomer i) based on the total weight of the ethylenically unsaturated monomers.

The monomeric composition may comprise monomer j). Monomer j) is an ethylenically unsaturated monomer comprising a silane group. Monomer j) may be a mixture of ethylenically unsaturated monomers comprising a silane group.

In particular, monomer j) may comprise an alkoxysilane group. More particularly, monomer j) may comprise an alkoxysilane group having the following formula:

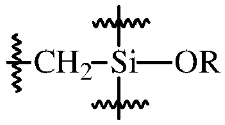

where R is an alkyl, in particular R is an alkyl comprising 1-6 carbon atoms, more particularly R is methyl or ethyl.

In one embodiment, monomer j) may be an unsaturated monomer comprising a dialkoxysilane or a trialkoxysilane group. More particularly, monomer j) may comprise a dialkoxysilane group having the following formula:

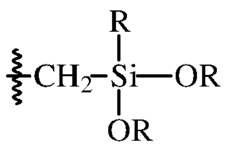

or a trialkoxylsilane group having the following formula:

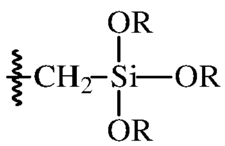

wherein each R is independently an alkyl, in particular an alkyl comprising 1-6 carbon atoms, more particularly methyl

or ethyl.

Monomer j) may comprise 2 to 30 carbon atoms and a group selected from methacryloyl (-C(=O)-C($CH_3$)=$CH_2$) and vinyl (-CH=$CH_2$).

In particular, monomer j) may be selected from 3-methacryloxypropyl tri(alkoxy)silane, methacryloxymethyl tri(alkoxy)silane, 3-methacryloxypropylmethyl di(alkoxy)silane, vinylalkyl di(alkoxy)silane, vinyl tri(alkoxy)silane and mixtures thereof.

More particularly, monomer j) may selected from vinyl trimethoxysilane, vinyl diimethoxymethylsilane, vinyl triethoxysilane, vinyl tripropoxysilane, vinyl triisopropoxysilane, vinyl tris(methoxyethoxy)silane, vinyl tributoxysilane, vinyl triacetoxysilane, 3-methacryloxypropyl trimethoxysilane, 3-methacryloxypropylmethyl dimethoxysilane, methacryloxymethyl trimethoxysilane, 3-methacryloxypropyl tris(2-methoxyethoxy) silane, vinyl trichlorosilane, vinyl methyldichlorosilane, vinyltris(2-methoxyethoxy)silane and mixtures thereof.

Even more particularly, monomer j) may be 3-methacryloxypropyl trimethoxysilane.

The monomeric composition comprises 0 to 5%, in particular 0.01 to 5%, more particularly 0.01 to 1%, even more particularly 0.05 to 0.5%, by weight of monomer j) based on the total weight of the ethylenically unsaturated monomers.

The type and amount of monomers a), b), c), d) e), f), g), h), i and j) may be adjusted so that the resulting polymer particles exhibit the desired Tg as defined above.

In a preferred embodiment, the ethylenically unsaturated monomers of the monomeric composition comprise, consist of or consist essentially of one of the following combination of monomers:

- monomers a) and b);
- monomers a), b) and c);
- monomers a), b), c) and e);
- monomers a) and d);
- monomers a), c) and d);
- monomers a), c), d) and e); or
- monomers a), b), c), d) and e).

In one embodiment, the total weight of monomers a) and b) represents at least 90%, in particular at least 95%, more particularly at least 98%, even more particularly at least 99%, more particularly still 100% of the total weight of the ethylenically unsaturated monomers.

In another embodiment, the total weight of monomers a), b) and c) represents at least 90%, in particular at least 95%, more particularly at least 98%, even more particularly at least 99%, more particularly still 100% of the total weight of the ethylenically unsaturated monomers.

In another embodiment, the total weight of monomers a), b), c) and e) represents at least 90%, in particular at least 95%, more particularly at least 98%, even more particularly at least 99%, more particularly still 100% of the total weight of the ethylenically unsaturated monomers.

In one embodiment, the total weight of monomers a) and d) represents at least 90%, in particular at least 95%, more particularly at least 98%, even more particularly at least 99%, more particularly still 100% of the total weight of the ethylenically unsaturated monomers.

In another embodiment, the total weight of monomers a), c) and d) represents at least 90%, in particular at least 95%, more particularly at least 98%, even more particularly at least 99%, more particularly still 100% of the total weight of the ethylenically unsaturated monomers.

In another embodiment, the total weight of monomers a), c), d) and e) represents at least 90%, in particular at least 95%, more particularly at least 98%, even more particularly at least 99%, more particularly still 100% of the total weight of the ethylenically unsaturated monomers.

In another embodiment, the total weight of monomers a), b), c), d) and e) represents at least 90%, in particular at least 95%, more particularly at least 98%, even more particularly at least 99%, more particularly still 100% of the total weight of the ethylenically unsaturated monomers

The monomeric composition may further comprise additional components selected from a chain transfer agent, an initiator, a crosslinker, a surfactant, a buffer and mixtures thereof. Preferably, the monomeric composition may further comprise a surfactant, an initiator and optionally a chain transfer agent.

*Chain-transfer agent*

The monomeric composition may further comprise a chain transfer agent. In one embodiment, the monomeric composition comprises a chain transfer agent. In another embodiment, the monomeric composition is free of a chain transfer agent. When the monomeric composition is free of monomer b), the monomeric composition may comprise a

chain transfer agent. When the monomeric composition comprises monomer b), the monomeric composition may be free of a chain transfer agent.

The chain transfer agent may be a compound able to react with a growing polymer chain to form a "dead" polymer with the concurrent formation of a new center for polymer growth. Chain transfer agents are also referred to as molecular weight modifiers as they are used to control the molecular weight of the polymer chain. Suitable chain transfer agents are well known in the art and include, for example, thiols such as n-dodecyl mercaptan, tert-dodecyl mercaptan, iso-octyl 3-mercaptopropionate, iso-octyl mercaptoacetate and 2-ethylhexyl thioglycolate; halocarbons such as carbon tetrachloride and carbon tetrabromide. In one embodiment, the monomeric composition comprises a chain transfer agent comprising a thiol group, more particularly a chain transfer agent selected from n-dodecyl mercaptan, tert-dodecyl mercaptan, iso-octyl 3-mercaptopropionate, isooctyl mercaptoacetate or 2-ethylhexyl thioglycolate. Even more particularly, the chain transfer agent may be n-dodecyl mercaptan or tert-dodecyl mercaptan,

The monomeric composition comprises at most 0.2%, at most 0.15%, at most 0.1%, at most 0.05%, at most 0.02%, at most 0.01%, at most 0.005%, at most 0.002%, at most 0.001% or even 0%, by weight of chain transfer agent based on the total weight of the ethylenically unsaturated monomers. In particular, the monomeric composition may comprise from 0 to 0.2%, from 0 to 0.15%, from 0 to 0.1%, from 0 to 0.05%, from 0 to 0.02%, from 0 to 0.01%, from 0 to 0.005%, from 0 to 0.002%, from 0 to 0.001%, or even 0%, by weight of chain transfer agent based on the total weight of the ethylenically unsaturated monomers.

When the monomeric composition comprises a chain transfer agent, the amount of chain transfer agent in the monomeric composition may be 0.005 to 0.2%, from 0.010 to 0.095%, from 0.020 to 0.090%, from 0.020 to 0.080%, from 0.020 to 0.070%, from 0.020 to 0.060% or from 0.020 to 0.050%, by weight of chain transfer agent based on the total weight of the ethylenically unsaturated monomers.

*Surfactant*

The monomeric composition comprises a surfactant. The monomeric composition may comprise a mixture of surfactants. The surfactant may be a compound having both a hydrophilic and a hydrophobic part that is able to form micelles of monomer. The surfactant may act as a stabilizer during and/or after the emulsion polymerization.

The surfactant may be selected from an anionic surfactant, a non-ionic surfactant and mixtures thereof, preferably a mixture of an anionic surfactant and a non-ionic surfactant. Examples of preferred surfactants include, but are not limited to an alkyl sulfate, an alkyl ether sulfate, an alkyl sulfonate, an alkyl benzenesulfonate, an optionally substituted diphenyl oxide disulfonate, an optionally ethoxylated sulfosuccinate mono- or diester, a phosphonate mono- or diester, a phosphate mono- or diester, an ethoxylated fatty alcohol, an optionally ethoxylated fatty acid, an ethoxy-propoxy copolymer (EO-PO copolymer) and mixtures thereof. A list of suitable surfactants is available in the book "Surfactants and Polymers in Aqueous solutions" (Holmberg et al., 2002, John Wiley & Sons).

Examples of suitable alkyl sulfates and alkyl ether sulfates are optionally ethoxylated C6-C22 fatty alcohol sulfates, such as decyl sulfate, lauryl sulfate (like Disponil® SLS), stearyl sulfate, C12-C14 fatty alcohol ether sulfate with 2 to 50 EO units (like Disponil® FES 77, Disponil® FES 27, Disponil® FES 993, Disponil® FES 32, Rhodapex LA 120s).

Examples of suitable alkyl sulfonates are C6-C22 fatty alcohol sulfonates such as decyl sulfonate, lauryl sulfonate and stearyl sulfonate.

Examples of suitable alkyl benzenesulfonates are benzene sulfonates substituted with a linear or branched C6-C22 alkyl group such as sodium dodecylbenzene sulfonate (like POLYSTEP® A-16-22 or Rhodacal® DS-4).

An example of a suitable diphenyl oxide disulfonate is sodium dodecyl diphenyl oxide disulfonate (like Dowfax® 2A1, Calfax® DB45).

Examples of suitable ethoxylated fatty alcohols are ethoxylated C6-C22 fatty alcohols with EO degree of 2 to 50 such as C12-C14 alcohol ethoxylates (like Tergitol® 15-S-20), C13 alcohol ethoxylates (like Emulan® TO 4070, Emulan® TO 2080), C16-C18 alcohol ethoxylates (like Empilan® KM80).

Examples of suitable sulfosuccinate mono- or diesters are optionally ethoxylated C6-C20 alkyl monoesters or diesters of sulfosuccinic acid (like Aerosol@ A-102, Aerosol@ MA-80, Aerosol® GPG).

Examples of suitable phosphate mono- or diesters are optionally alkoxylated alkyl phosphate monoester-diacids or salts, optionally alkoxylated alkyl diphosphate diester-monoacids or salts or mixtures thereof (like Rhodafac® Rs 410, Rhodafac® Rs 610 Rhodafac® Rs 710, Rhodafac® Rs 960, Rhodafac® Re 610).

In one embodiment, the surfactant is a mixture of an optionally ethoxylated sulfosuccinate monoor diester and an ethoxylated fatty alcohol. In another embodiment, the surfactant is a mixture of an alkyl ether sulfate, a diphenyl oxide disulfonate and an optionally ethoxylated sulfosuccinate mono- or diester. In another embodiment, the surfactant is a mixture of a phosphate mono- or diester and at least one of the following surfactants: an alkyl ether sulfate, an optionally ethoxylated sulfosuccinate mono- or diester and mixtures thereof as described in WO 2018/184852.

The monomeric composition may comprise 0.01 to 5%, in particular 0.1 to 2%, more particularly 0.2 to 1.5%, by weight of surfactant based on the total weight of the ethylenically unsaturated monomers.

*Initiator*

The monomeric composition comprises an initiator. The initiator may be a water-soluble free radical initiator. Suitable initiators are well known in the art and include, for example, peroxides as described above for the post-polymerization treatment, especially inorganic persulfate compounds such as ammonium persulfate, potassium persulfate and sodium persulfate; hydrogen peroxide; organic hydroperoxides such as cumene hydroperoxide, t-butyl hydroperoxide, acetyl peroxide, benzoyl peroxide, lauroyl peroxide; peracetic acid and perbenzoic acid; redox initiators wherein a water soluble reducing agent such as a ferrous compound promotes the decomposition of a peroxide; as well as other free radical producing materials such as an azo-initiator, for example 2,2'-azobisisobutyronitrile, 4,4'-azobis(4-cyanovaleric acid) or 2,2'-azobis(2-methylbutyronitrile); and combinations thereof. In one embodiment, the monomeric composition comprises an initiator selected from selected from a peroxide, in particular an initiator selected from ammonium persulfate, potassium persulfate, sodium persulfate and mixtures thereof. More particularly, the initiator may be sodium persulfate.

The monomeric composition may comprise 0.01 to 3.0%, in particular 0.1 to 2.0%, more particularly 0.2 to 1.5%, by weight of initiator based on the total weight of the ethylenically unsaturated monomers.

*Crosslinker*

The monomeric composition may comprise a crosslinker. The crosslinker may be a multifunctional compound capable of reacting with ethylenically unsaturated monomers. In one embodiment, the monomeric composition comprises a crosslinker bearing at least two polymerizable carbon-carbon double bonds; more particularly a multifunctional (meth)acrylate, a polyvinylic monomer or a compound comprising both a (meth)acrylic group and a vinyl group, even more particularly a crosslinker selected from allyl (meth)acrylate, diallyl (meth)acrylate, vinyl acrylate, divinyl benzene, ethylene glycol dimethacrylate, diallyl phthalate, hexanediol diacrylate, trimethylolpropane triacrylate, pentaerythritol triallyl ether, dicyclopentenyl oxyethyl methacrylate, glycerol triacrylate and mixtures thereof.

The monomeric composition may comprise 0 to 2%, in particular 0 to 1%, more particularly 0 to 0.5% by weight of crosslinker based on the total weight of the ethylenically unsaturated monomers.

*Buffer*

The monomeric composition may comprise a buffer. The buffer may be a compound that controls and maintains the pH during the polymerization step in a controlled range, for example from 2 to 10, in particular 3 to 9. In particular, the buffer may be selected from ammonia, sodium bicarbonate, sodium carbonate, sodium acetate, 2-amino-2-methyl-1-propanol and sodium hydroxide.

The monomeric composition may comprise 0 to 0.5%, in particular 0.01 to 0.25%, by weight of buffer based on the total weight of the ethylenically unsaturated monomers.

*Preferred embodiments of the monomeric composition*

In one embodiment, the monomeric composition comprises, consists of or consists essentially of:

- 70 to 95%, in particular 75 to 90%, more particularly 80 to 90%, of monomer a);
- 1 to 20%, in particular 2 to 18%, more particularly 4 to 15%, of monomer b);
- 0 to 10%, in particular 0.1 to 5%, more particularly 0.5 to 3%, of monomer c);
- 0 to 10%, in particular 0.1 to 5%, more particularly 0.5 to 3%, of monomer e);
- 0 to 0.2%, in particular 0 to 0.1%, more particularly 0%, of chain transfer agent;
- 0.01 to 3%, in particular 0.1 to 2%, more particularly 0.2 to 1.5%, of initiator;
- 0.01 to 5%, in particular 0.1 to 2%, more particularly 0.2 to 1.5%, of surfactant; and
- water;

wherein the % are % by weight based on the total weight of the ethylenically unsaturated monomers.

In another embodiment, the monomeric composition comprises, consists of or consists essentially of:

- 70 to 95%, in particular 75 to 90%, more particularly 80 to 90%, of monomer a);
- 0 to less than 1%, in particular 0 to 0.5%, more particularly 0% of monomer b);
- 0 to 10%, in particular 0.1 to 5%, more particularly 0.5 to 3%, of monomer c);
- 1 to 30%, in particular 2 to 20%, more particularly 4 to 16%, of monomer d);
- 0 to 10%, in particular 0.1 to 5%, more particularly 0.5 to 3%, of monomer e);

- 0 to 0.2%, in particular 0 to 0.095%, more particularly 0 to 0.050%, of chain transfer agent;
- 0.01 to 3%, in particular 0.1 to 2%, more particularly 0.2 to 1.5%, of initiator;
- 0.01 to 5%, in particular 0.1 to 2%, more particularly 0.2 to 1.5%, of surfactant; and
- water;

wherein the % are % by weight based on the total weight of the ethylenically unsaturated monomers.

In another embodiment, the monomeric composition comprises, consists of or consists essentially of:

- 70 to 95%, in particular 75 to 90%, more particularly 80 to 90%, of monomer a);
- 1 to 10%, in particular 2 to 7%, more particularly 2.5 to 5%, of monomer b);
- 0 to 10%, in particular 0.1 to 5%, more particularly 0.5 to 3%, of monomer c);
- 1 to 30%, in particular 2 to 20%, more particularly 4 to 16%, of monomer d);
- 0 to 10%, in particular 0.1 to 5%, more particularly 0.5 to 3%, of monomer e);
- 0 to 0.2%, in particular 0 to 0.095%, more particularly 0 to 0.050%, of chain transfer agent;
- 0.01 to 3%, in particular 0.1 to 2%, more particularly 0.2 to 1.5%, of initiator;
- 0.01 to 5%, in particular 0.1 to 2%, more particularly 0.2 to 1.5%, of surfactant; and
- water;

wherein the % are % by weight based on the total weight of the ethylenically unsaturated monomers.

*Additional components of adhesive composition*

The adhesive composition according to the invention comprises the aqueous dispersion of polymer particles as described above and optionally a tackifier resin.

A tackifier resin is a polymeric or oligomeric adjuvant for adhesive polymers or, generally, for elastomers, which increases their autoadhesion (tack, inherent stickiness, self-adhesion), meaning that they adhere firmly to surfaces after brief, gentle applied pressure.

Tackifier resins are known, for example, from Adhesive Age, July 1987, pages 19-23 or Polym. Mater. Sci. Eng. 61 (1989), pages 588-592.

The tackifier may be selected from natural resins, such as rosin and its derivatives formed by disproportionation, isomerization, polymerization, dimerization, esterification and/or hydrogenation; terpenes and modified terpenes; aliphatic, cycloaliphatic and aromatic hydrocarbon resins (C5 aliphatic resins, C9 aromatic resins, and C5/C9 aliphatic/aromatic hydrocarbon resins; hydrogenated hydrocarbon resins; and mixtures thereof.

Rosins consist predominantly of abietic acid or derivatives of abietic acid. They may be present in their salt form (with, for example, monovalent or polyvalent counterions (cations)) or, preferably, in their esterified form. Alcohols used for the esterification may be monohydric or polyhydric. Examples are methanol, ethanediol, diethylene glycol, triethylene glycol, 1,2,3-propanethiol, and pentaerythritol.

Examples of terpenes and hydrocarbon resins are coumarone-indene resins, polyterpene resins, hydrocarbon resins based on unsaturated CH compounds, such as butadiene, pentene, methylbutene, isoprene, piperylene, divinylmethane, pentadiene, cyclopentene, cyclopentadiene, cyclohexadiene, styrene, alpha-methylstyrene, and vinyltoluene.

The tackifier resin can be added simply to the aqueous dispersion of polymer particles. The amount by weight of the tackifier resin may preferably 5 to 100 parts by weight, more preferably 10 to 50 parts by weight, based on 100 parts by weight of polymer particles (solid/solid).

The adhesive composition according to the invention may further comprise one or more additives selected from a wetting agent, a thickener, a defoamer, a filler, a colorant, a leveling agent, a plasticizer, a surfactant and combinations thereof.

In one embodiment, the adhesive composition of the invention comprises:

A) 60 to 100 parts by weight of solids of the aqueous dispersion of polymer particles as defined above;
B) 0 to 40 parts by weight of solids of at least one tackifier resin;
C) 0 to 10 parts by weight per 100 parts of A)+B), of one or more additives, such as a wetting agent, a thickener, a defoamer, a filler, a colorant, a leveling agent, a plasticizer, a surfactant and combinations thereof.

The adhesive composition of the invention may be obtained according to the process described hereinafter.

Process for the preparation of the adhesive composition

The adhesive composition of the invention may be obtained by preparing an aqueous dispersion of polymer

particles and subsequently adding a peroxide as a post-polymerization treatment.

The aqueous dispersion of the invention may be prepared using any known emulsion polymerization procedure which produces polymer dispersions in aqueous latex form. Such procedures are described in, for example, Encyclopedia of Polymer Science and Engineering, Vol. 8, p. 659 ff (1987).

Emulsion polymerization involves a system comprising water, monomers, surfactants and an initiator. The emulsion polymerization process typically starts by dispersing the monomers (organic phase) in water (aqueous phase) with the aid of surfactants to provide an emulsion. The initiator is usually dissolved in the aqueous phase and provides a source of free radicals that initiate polymerization. The dispersed monomer droplets act as reservoirs supplying monomer to the growing polymer particles by diffusion through the water. The polymer particles are prevented from coalescing with each other by the surfactant. The emulsion polymerization therefore provides as a product an aqueous dispersion of polymer particles.

The emulsion polymerization may be conducted with the monomeric composition described above. The emulsion polymerization may be conducted using the following conditions. A pre-emulsion comprising ethylenically unsaturated monomers and a surfactant in water may be prepared. A solution of initiator in water may be separately prepared. The pre-emulsion and the initiator solution may be fed in a reactor.

The introduction of the pre-emulsion may be continuous, for example over a time of 2 to 10 hours, in particular 4 to 8 hours. Alternatively, the introduction of the pre-emulsion may be discontinuous, for example part of the pre-emulsion may first be introduced in the reactor to form seed particles and the remainder of the pre-emulsion may be introduced in one or more successive steps. The ethylenically unsaturated monomers in the seed part of the pre-emulsion may represent from 0.05 to 10% by weight of the total weight of ethylenically unsaturated monomers. The emulsion polymerization may be a multistage emulsion polymerization with at least two successive steps of polymerization using different monomeric compositions.

The introduction of the initiator solution depends on the chemical nature of the initiator system and the kind of polymerization process. The initiator solution can be introduced in the reactor continuously or stepwise in the course of the emulsion polymerization. Normally, it is preferred to introduce part of the initiator solution in the reaction in a first step and then feeding the remainder into the reactor according to the monomers feed.

The temperature of the reactor during the emulsion polymerization may be maintained in the range 30 to 120°C, preferably from 60 to 100°C.

A post-polymerization treatment is conducted after the emulsion polymerization. The post-polymerization treatment may be conducted directly after the emulsion polymerization. The post-polymerization treatment may be conducted without cooling the emulsion polymerization medium.

The post-polymerization step may be carried out to change the structure of the polymer particles as described above. The change of structure of the polymer particles may lead to a decrease of the gel content of the polymer particles compared to the gel content of the polymer particles before the post-polymerization treatment. The change of structure of the polymer particles may lead to an increase of the weight average molecular weight (Mw) of the polymer particles compared to the Mw of the polymer particles before the post-polymerization treatment.

The post-polymerization treatment comprises adding a peroxide to the aqueous dispersion of polymer particles. The amount of peroxide that is added in the post-polymerization treatment is at least 0.008 meq effective peroxide/g of polymer present in the aqueous dispersion of polymer particles. The term effective peroxide is as defined above. In particular, the amount of peroxide added in the post-polymerization treatment may be at least 0.010, at least 0.015, at least 0.020, at least 0.025, at least 0.030, or at least 0.035, meq effective peroxide/g of polymer.

The peroxide used in the post-polymerization treatment is as defined above.

The post-polymerization treatment may be carried out either:

- in the absence of a reducing agent; or
- in the presence of a reducing agent and the equivalent ratio between the peroxide and the reducing agent is at least 2.0 in particular at least 2.5, more particularly at least 3.0.

The reducing agent may be as described above.

The post-polymerization treatment may be carried out at a temperature of at least 60°C, in particular at least 70°C, more particularly at least 80°C. If the post-polymerization treatment is carried out in the presence of a reducing agent, the temperature during the treatment may be at least 30°C, in particular at least 40°C, more particularly at least 50°C.

The post-polymerization treatment may be carried out until at least 80% or at least 85% of the peroxide is decomposed. The decomposition rate of the peroxide may be determined as described above.

After, the post-polymerization treatment, the content of the reactor may be cooled to a temperature of 20 to 40°C. The pH of the polymer dispersion may be adjusted in a pH range between 3.5 to 8.5.

The above post-polymerization treatment advantageously increases the adhesion of the adhesive composition.

In particular, it may lead to a good compromise between the adhesion and cohesion of the adhesive obtained with said composition.

Accordingly, the invention also relates to a process for increasing the adhesion of an adhesive composition wherein the process comprises a post-polymerization treatment of an aqueous dispersion of polymer particles with a peroxide in an amount of at least 0.008 meq effective peroxide/g of polymer present in the aqueous dispersion of polymer particles.

Adhesive articles

The adhesive composition of the invention may be used to obtain an adhesive article, in particular a pressure-sensitive adhesive article.

The present invention thus relates to a process for producing an adhesive article, the process comprising coating a substrate with the adhesive composition of the invention. The invention is also directed to adhesive article comprising a substrate coated with the adhesive composition of the invention. Is also part of the invention an adhesive article which results from the use of the adhesive composition of the invention.

Said adhesive article may be a pressure-sensitive article. Said adhesive article may be in the form of an adhesive label, an adhesive tape or an adhesive film, in particular a PSA label, a PSA tape or a PSA film. Particularly preferred adhesive articles are adhesive labels, preferably adhesive paper labels and adhesive film labels.

Suitable substrates on which the adhesive composition may be coated include, for example, paper, plastic films and metal foils, preferably paper and plastic films. The substrate may have a first surface and a second surface. At least part of the first surface may be coated with the adhesive composition of the invention. In one embodiment, the second surface may be printed or colored. The dyeing may be done, for example, by a colored coating-with pigments or dyes, having been produced by printing or in color thermal paper by heat. In another embodiment, at least part of the second surface may be coated with the adhesive composition of the invention.

The substrate may be at least partially coated on at least one surface with the adhesive composition according to the invention. The adhesive composition may be coated on the substrate by customary methods such as curtain coating, rolling, knife coating or brushing. The amount of adhesive composition applied on the substrate may be 0.1 to 70 g/$m^2$, preferably 20 to 60 g of solids per $m^2$. After the application, a drying step is used to remove the aqueous phase of the dispersion. The drying step may be carried out by heating, for example at a temperature of 50 to 150°C.

The coated substrates thus obtained, can be used as adhesive articles, in particular pressure-sensitive adhesive articles, such as labels, tapes or films. For subsequent use, the adhesive-coated side of the substrate can be laminated with a release paper, for example a siliconized paper. The adhesive articles may advantageously be applied on any type of surface, for example metal, wood, glass, paper or plastic.

The adhesive tape may be a single or double-coated tape.

The adhesive labels may be labels of paper or of thermoplastic film. The thermoplastic films for example could be films made of polyolefins (eg, polyethylene, polypropylene), films made of poly esters (eg, polyethylene terephthalate) or polyacetate. The surfaces of the thermoplastic polymer films are preferably corona treated.

The invention is further described in the following examples.

## EXAMPLES

### Materials and methods

In the examples, the following compounds were used:

| **Raw material** | Supplier | Abbreviation |
|---|---|---|
| butyl acrylate | Arkema | BA |
| 2-ethylhexyl acrylate | Arkema | 2EHA |
| Styrene | Total Petrochemicals | STY |
| Acrylic acid | Arkema | AA |
| 2-hydroxyethyl methacrylate | Arkema | HEMA |
| Aerosol® MA-80 (Sodium dihexyl sulfosuccinate) | Solvay | |
| Aerosol@ A-102 (Disodium laureth-6 sulfosuccinate) | Solvay | |
| Tergitol® 15-S-20 (secondary alcohol ethoxylate) | Dow | |

(continued)

| Raw material | Supplier | Abbreviation |
|---|---|---|
| Sodium persulfate | Peroxitalia | NaPS |
| tert-butyl hydroperoxide | Arkema | TBHP |
| Hydrogen peroxide | Arkema | $H_2O_2$ |

The following methods were used:

Method for forming test strip

The adhesive composition was applied on a PET film and dried at 80°C for a few minutes, in order to obtain a dry weight per unit area of about 20 g/$m^2$. Once the film was dried, it was laminated with a siliconized paper (liner). The film was cut in 2.5 cm wide strips which were stored for 24 hours at 23°C and 50% Relative Humidity (RH). The strip was then applied on a stainless steel (SS) plate or a High-density polyethylene (HDPE) plate.

Peel adhesion

A test strip was prepared according to the Method for forming test strip. The 180° peel adhesion was determined according to the FINAT FTM1 method (2014 revision) 20 min after the strip had been attached to the stainless steel (SS) or high-density polyethylene (HDPE) substrate.

Cohesion test - Resistance to shear

A test strip was prepared according to the Method for forming test strip. The shear strength was determined at 23°C according to the FINAT FTM7 method (2014 revision).

Glass transition temperature (Tg)

A film of the adhesive composition was applied on a PTFE plate, and dried for 7 days at 23°C and 50% Relative Humidity. The Tg was determined by Differential Scanning Calorimetry (DSC). The DSC was carried out with a temperature increase of -100 to 100°C with a rate of 20°C/min. Two runs were carried out with a cooling rate of 40°C/min between the runs. The Tg corresponds to the temperature of the midpoint point of the DSC curve of the second run.

Gel content

A film of the adhesive composition was applied on a PTFE plate, and dried for 7 days at 23°C and 50% Relative Humidity. The dried film was weighed and immersed in 150 g of tetrahydrofuran (THF) at 23°C for 72h. The film was recovered with a standardized paper filter and then dried in an oven at 70°C until the weight of the film remained constant (about 4 days). The gel content corresponds to the following equation:

$$\%\, gel = \frac{w_{immersion}}{w_{initial}} \times 100$$

wherein

$_{\text{Wimmersion}}$ is the weight of the film after immersion in THF and subsequent drying $W_{iinitial}$ is the weight of the film prior to immersion.

Weight average molecular weight analysis (Mw)

A film of the adhesive composition was applied on a PTFE plate, and dried for 7 days at 23°C and 50% Relative Humidity. 90 mg of dry film was subjected to 3 days of extraction in 30 mL of THF, during the daytime at 40°C without stirring and overnight on an orbiting stirrer at 150 rpm at 23°C. Then medium was filtered and the molecular weight was determined on the filtrate by size exclusion chromatography with an HPLC Perkin Elmer Altus A-10, with refractive-index detector and 2 columns (Agilent PL gel 10μm MIXED-B 300x7.5mm), at 40°C, with an isocratic flow of THF of 1 mL/min.

Residual monomers and VOC analysis

The Volatile Organic Compounds or "VOC" generally refers to organic compounds that have a boiling point under 250°C, at atmospheric pressure. The residual monomer content and the VOC content were determined with a gas

chromatograph Clarus 580 Perkin Elmer equipped with a column (Agilent DB-Select 624UI 60m x 0,250 mm x 1,40 μm), a head space auto sampler and flame ionization detector (FID) using the full evaporation head space technique and iso-butanol as internal standard, in accordance with the method described in "Full Evaporation Head Space Gas Chromatographic Technique for the Determination of Residual Monomers and VOC in Polymer Dispersion", published on: "International Journal of Polymer Analysis and Characterization" Vol 8 n°5, 2003.

**Example 1: Preparation of an aqueous dispersion and post-polvmerization treatment with less than 0.008 meg of effective peroxide/g of polymer particles (comparative)**

An aqueous dispersion of polymer particles was prepared with the following steps A) to G):

A) 1700 g of deionized water were added in a glass reactor fitted with a condenser, a stirrer, a temperature control system and inlets for nitrogen and the feed solutions. 3.0 g of Sodium Carbonate, 13.0 g of Aerosol@ MA-80 and 12.6 g Aerosol@ A-102 were then added to the reaction.

B) A monomer pre-emulsion was prepared in a separate container fitted with a stirrer (preemulsifier). The monomer pre-emulsion was obtained with 1230 g of deionized water, 43 g of Tergitol® 15-S-20, 7 g of Aerosol@ A-102 and 4026 g of a mixture of monomers comprising 56 wt% of 2EHA, 28 wt% of BA, 11 wt% of STY, 2 wt% of AA and 2 wt% of HEMA based on the total weight of the mixture of monomers.

C) When the contents of the reactor reached a temperature of 81°C, 280 g of the monomer pre-emulsion was introduced in the reactor followed by 48 g of a 17 wt% sodium persulfate solution.

D) Two minutes after the end of step C), the remaining portion of the monomer pre-emulsion and 258 g of a 5 wt% sodium persulfate solution were fed into the reactor at a constant feed rate, over a period of 3 hours, taking care to keep the contents of the reactor at a temperature of 82-84°C throughout the feed.

E) The temperature was maintained at 84-86°C for a further 45 minutes.

F) The temperature was then cooled to 65-70°C and 69 g of a 13 wt% TBHP solution and 188 g of a 6 wt% Bruggolite FF6 solution were feed separately into the reactor over a period of 90 minutes at constant rate.

G) Ten minutes after the end of step F), the resulting mixture was cooled to 35°C. The pH was not corrected. The mixture was filtered through a 36 mesh screen. The solids content of the dispersion was set between 50-55 wt%.

**Example 2: Preparation of an aqueous dispersion and post-polvmerization treatment with at least 0.008 meg of effective peroxide/g of polymer particles (according to the invention)**

Steps A) to E) of example 1 were repeated but post-polymerization treatment steps F) and G) were replaced with the following post-polymerization treatment steps F') and G'):

F') 0.09 g of Iron sulfate were added in the reactor while maintaining the temperature at 82-84°C. 112 g of a 10 wt% solution of sodium persulfate together with 60 g of a 15 wt% $H_2O_2$ solution were then fed at constant feed rate over a course of 3h.

G') Ten minutes after the end Step F'), the resulting mixture was cooled to 35°C. The pH was corrected with sodium hydroxide up to pH 4.0-5.0. The mixture was filtered through a 36 mesh screen. The solids content of the dispersion was set between 64-66 wt%.

The differences between the post-polymerization treatments of Examples 1 and 2 are summarized in the table below:

| | Post-polymerization Oxidative treatment at T>60°C | | | | |
|---|---|---|---|---|---|
| | Temperature (°C) | Peroxide | Reducing Agent | meq of effective peroxide per g of polymer (meq/gr) | meq of reducing agent (meq/gr) |
| Ex 1 (comparative) | 65 | TBHP | Bruggolite FF6 | 0.0495 | 0.053 |
| Ex 2 (invention) | 82 | $H_2O_2$ + NaPS | None | 0.140 + 0.027 | None |

**Example 3: Applicative results**

The performances of the adhesive compositions of Examples 1 and 2 are detailed in the table below:

| | Ex 1 | Ex 2 |
|---|---|---|
| Peel adhesion after 20 min SS (N/25mm) | 7.0 (A*) | 8.7 (A*) |
| Peel adhesion after 20 min HDPE (N/25mm) | 1.8 (A*) | 2.3 (A*) |
| Shear adhesion (h) | > 300 | > 300 |
| Gel content (%) | 83 | 71.7 |
| Weigh average molecular weight (g/mol) | 393,824 | 200,823 |
| Residual monomers (ppm) | 118 | 114 |
| Total VOC (ppm) | 1480 | 890 |
| * A = adhesive separation C = cohesive separation | | |

The adhesive composition of Example 2 (according to the invention) exhibits higher adhesion that that of Example 1 (comparative) while maintaining excellent cohesion. Further, the adhesive composition of Example 2 (according to the invention) has lower residual monomer content and lower VOC content that that of Example 1 (comparative). The post-polymerization treatment of Example 2 modifies the structure of the polymer particles compared to the conventional post-polymerization of Example 1 as reflected by the differences in Gel content and Weight average molecular weight.

## Claims

1. An adhesive composition comprising an aqueous dispersion of polymer particles obtained by emulsion polymerization of a monomeric composition comprising:

   a) ethylenically unsaturated monomers;
   b) at most 0.2% by weight of chain transfer agent based on the total weight of the ethylenically unsaturated monomers;
   c) a surfactant; and
   d) an initiator;

   wherein the polymer particles have been subjected to a post-polymerization treatment with a peroxide in an amount of at least 0.008 meq effective peroxide/g of polymer.

2. The adhesive composition according to claim 1, wherein the peroxide is selected from a persulfate, hydrogen peroxide, an organic hydroperoxide, a peracid, or a mixture thereof; in particular ammonium persulfate, potassium persulfate, sodium persulfate, hydrogen peroxide or a mixture thereof; more particularly ammonium persulfate or a mixture of ammonium persulfate and hydrogen peroxide.

3. The adhesive composition according to claim 1 or 2, wherein the amount of peroxide used in the post-polymerization

treatment is at least 0.010, at least 0.015, at least 0.020, at least 0.025, at least 0.030, or at least 0.035, meq effective peroxide/g of polymer.

**4.** The adhesive composition according to any one of claims 1 to 3, wherein the post-polymerization treatment is carried out either:

- in the absence of a reducing agent; or
- in the presence of a reducing agent and the equivalent ratio between the peroxide and the reducing agent is at least 2.0 in particular at least 2.5, more particularly at least 3.0.

**5.** The adhesive composition according to any one of claims 1 to 4, wherein the post-polymerization treatment is carried out at a temperature of at least 60°C, in particular at least 70°C, more particularly 80°C.

**6.** The adhesive composition according to any one of claims 1 to 5, wherein the post-polymerization treatment is carried out until 80% of the peroxide is decomposed.

**7.** The adhesive composition according to any one of claims 1 to 6, wherein the monomeric composition comprises a monomer a) which a C1-C12 alkyl (meth)acrylate or a mixture of C1-C12 alkyl (meth)acrylates; in particular monomer a) is selected from methyl methacrylate, ethyl (meth)acrylate, propyl (meth)acrylate, n-butyl (meth)acrylate, 2-ethylhexyl (meth)acrylate, 2-octyl (meth)acrylate, isooctyl (meth)acrylate, nonyl (meth)acrylate, decyl (meth)acrylate, 2-propylheptyl (meth)acrylate, lauryl (meth)acrylate or a mixture thereof; more particularly selected from n-butyl acrylate, 2-ethylhexyl acrylate, 2-octyl acrylate, isooctyl acrylate, nonyl (meth)acrylate, decyl (meth)acrylate, 2-propylheptyl (meth)acrylate or a mixture thereof; even more particularly selected from n-butyl acrylate, 2-ethylhexyl acrylate or a mixture thereof.

**8.** The adhesive composition according to any one of claims 1 to 7, wherein the total amount of monomer a) in the monomeric composition is at least 60%, at least 65%, at least 70%, at least 75% or at least 80%, by weight based on the total weight of the ethylenically unsaturated monomers.

**9.** The adhesive composition according to any one of claims 1 to 8, wherein the monomeric composition further comprises one or more monomers selected from:

- monomer b) which is a vinyl aromatic monomer, in particular selected from styrene, alpha-methylstyrene, tert-butylstyrene, ortho-, meta-, and para-methylstyrene, ortho-, meta- and para-ethylstyrene, o-methyl-p-isopropylstyrene, p-chlorostyrene, p-bromostyrene, o,p-dichlorostyrene, o,p-dibromostyrene, ortho-, meta- and paramethoxystyrene, optionally substituted indenes, optionally substituted vinylnaphthalenes, acenaphthylene, diphenylethylene, vinyl anthracene or mixtures thereof, more particularly styrene;
- monomer c) which is an ethylenically unsaturated monomer comprising an acidic group or a salt thereof, in particular selected from (meth)acrylic acid, 2-chloroacrylic acid, vinyl phosphonic acid, vinyl sulfonic acid, p-styrene carboxylic acid, p-styrene sulfonic acid, itaconic acid, maleic acid, maleic anhydride, tetrahydrophthalic acid, tetrahydrophthalic anhydride, fumaric acid, crotonic acid, 3-butenoic acid, mesaconic acid, citraconic acid, 2-carboxyethyl acrylate, sodium 2-acrylamido-2-methyl propane sulfonate, sodium vinyl sulfonate, sodium (meth)allyl sulfonate, sodium 1-allyloxy-2-hydroxypropane sulfonate, a phosphate ester of alkyl (meth)acrylate, a phosphate ester of alkyl (meth)acrylamide, a phosphate ester of alkyl crotonate, a phosphate ester of alkyl maleate, a phosphate ester of alkyl fumarate, a phosphate diester of alkyl (meth)acrylate, a phosphate diester of alkyl crotonate, vinyl phosphate, (meth)allyl phosphate, a phosphate ester of polypropylene glycol mono(meth)acrylate, a phosphate ester of polyethylene glycol mono(meth)acrylate, a phosphate ester of polyoxyethylene allyl ether or mixtures thereof; more particularly acrylic acid;
- monomer d) which is a vinyl ester of a carboxylic acid, in particular vinyl acetate, vinyl propionate, vinyl hexanoate, vinyl 2-ethylhexanoate, vinyl octanoate, vinyl pelargonate, vinyl laurate, vinyl stearate, vinyl esters of versatic acid and mixtures thereof, more particularly vinyl acetate;
- monomer e) which is a monomer bearing a functional group selected from hydroxy, epoxy, carbonyl and a nitrogen-containing functional group, in particular 2-hydroxyethyl (meth)acrylate, 3-hydroxypropyl (meth)acrylate, 4-hydroxybutyl (meth)acrylate, hydroxybutenyl (meth)acrylate, glycidyl (meth)acrylate, acetoacetoxyethyl (meth)acrylate, acetoacetoxypropyl (meth)acrylate, acetoacetobutyl (meth)acrylate, 2,3-di(acetoacetoxy)propyl (meth)acrylate, diacetone (meth)acrylate, acetonyl (meth)acrylate, allylacetoacetate, vinylacetoacetates, acetoacetamides, methylvinylketone, ethylvinylketone, butylvinylketone, (meth)acroleine, crotonaldehyde, formylstyrene, (meth)acrylonitrile, (meth)acrylamide, N,N-dimethylacrylamide, diacetone acrylamide, N-methylol(meth)acrylamide, 2-aminoethyl (meth)acrylate, t-butyl aminoethyl methacrylate, dimethylaminoethyl methacrylate, diethylaminoethyl methacrylate, N,N-dimethylaminopropyl methacrylamide, 2-tbutylaminoethyl methacrylate, N,N-dimethylaminoethylacrylate, N-(2-methacryloyloxyethyl)ethylene urea and methacrylamidoethylethylene urea and mixtures thereof, more particularly 2-hydroxyethyl (meth)acrylate;
- monomer f) which is a vinyl ether, in particular vinyl methyl ether, vinyl ethyl ether, vinyl n-butyl ether, vinyl iso-butyl ether and mixtures thereof
- monomer g) which is a conjugated diene, in particular butadiene, isoprene, pentadiene, chlorodiene and mixtures thereof;
- monomer h) which is an alpha-olefin, in particular ethylene, propene, 1-butene, isobutylene, diisobutylene, 1-nonene, 1-decene and mixtures thereof
- monomer i) which is a vinyl halide, in particular vinyl chloride, vinylidene chloride and mixtures thereof
- monomer j) which is an alkoxysilane monomer, in particular vinyl trimethoxysilane, vinyl diimethoxymethylsilane, vinyl triethoxysilane, vinyl tripropoxysilane, vinyl triisopropoxysilane, vinyl tris(methoxyethoxy)silane, vinyl tributoxysilane, vinyl triacetoxysilane, 3-methacryloxypropyl trimethoxysilane, 3-methacryloxypropylmethyl dimethoxysilane, methacryloxymethyl trimethoxysilane, 3-methacryloxypropyl tris(2-methoxyethoxy) silane, vinyl trichlorosilane, vinyl methyldichlorosilane, vinyltris(2-methoxyethoxy)silane and mixtures thereof;

and mixtures thereof.

**10.** The adhesive composition according to any one of claims 1 to 9, wherein the chain transfer agent is a thiol; in particular n-dodecyl mercaptan, tert-dodecyl mercaptan, isooctyl 3-mercaptopropionate, isooctyl mercaptoacetate 2-ethylhexyl thioglycolate and mixtures thereof; more particularly n-dodecyl mercaptan, tert-dodecyl mercaptan and mixtures thereof.

**11.** The adhesive composition according to any one of claims 1 to 10, wherein the monomeric composition is free of chain transfer agent.

**12.** The adhesive composition according to any one of claims 1 to 11, wherein the total amount of chain transfer agent in the monomeric composition is from 0.005 to 0.2%, from 0.010 to 0.095%, from 0.020 to 0.090%, from 0.020 to 0.080%, from 0.020 to 0.070%, from 0.020 to 0.060% or from 0.020 to 0.050%, by weight based on the total weight of the ethylenically unsaturated monomers.

**13.** The adhesive composition according to any one of claims 1 to 12, wherein the polymer particles have a Tg of -65 to -10°C, in particular -50 to -20°C, more particularly -48 to -25°C.

**14.** The adhesive composition according to any one of claims 1 to 13, wherein the aqueous dispersion has a gel content of 50 to 90%, in particular 65 to 85%, more particularly 70 to 85%.

**15.** The adhesive composition according to any one of claims 1 to 14, wherein the adhesive composition further comprises a tackifier resin; in particular a tackifier resin selected from natural resins, such as rosin and its derivatives formed by disproportionation, isomerization, polymerization, dimerization, esterification and/or hydrogenation; terpenes and modified terpenes; aliphatic, cycloaliphatic and aromatic hydrocarbon resins (C5 aliphatic resins, C9 aromatic resins, and C5/C9 aliphatic/aromatic hydrocarbon resins; hydrogenated hydrocarbon resins; and mixtures thereof.

**16.** The adhesive composition according to any one of claims 1 to 15, wherein the adhesive composition is a pressure-sensitive adhesive composition.

**17.** A process for the preparation of an adhesive composition comprising the following steps:

i) preparation of an aqueous dispersion of polymer particles by emulsion polymerization of a monomeric composition as defined in any one of claims 1 and 7 to 12;
ii) adding a peroxide to the aqueous dispersion of polymer particles obtained in step a) in an amount of at least 0.008 meq effective peroxide/g of polymer present in the aqueous dispersion of polymer particles.

**18.** A process for increasing the adhesion of an adhesive composition wherein the process comprises a post-polymerization treatment of an aqueous dispersion of polymer particles with a peroxide in an amount of at least 0.008 meq effective peroxide/g of polymer present in the aqueous dispersion of polymer particles.

19. A process for producing an adhesive article, the process comprising coating a substrate with the adhesive composition of any one of claims 1 to 16.

20. An adhesive article comprising a substrate coated with the adhesive composition of any one of claims 1 to 16, in particular the adhesive article is an adhesive label, an adhesive tape or an adhesive film.

Europäisches Patentamt
European Patent Office
Office européen des brevets

# EUROPEAN SEARCH REPORT

Application Number
EP 21 30 6578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MÁRQUEZ IRENE ET AL: "Influence of Acrylic Acid and Tert-Dodecyl Mercaptan in the Adhesive Performance of Water-Based Acrylic Pressure-Sensitive Adhesives", POLYMERS, vol. 12, no. 12, 30 December 2020 (2020-12-30), page 2879, XP055917792, CH ISSN: 2073-4360, DOI: 10.3390/polym12122879 * paragraphs [02.1] - [02.2], [0004]; figures 2-3; table 1 * ----- | 1-12, 16-20 | INV. C08F8/06 C09J133/06 |
| X | EP 3 880 763 A1 (ARKEMA FRANCE [FR]) 22 September 2021 (2021-09-22) * paragraph [0034]; examples 3-7; tables 2-3 * ----- | 1-20 | |
| X,D | WO 2018/184852 A1 (ARKEMA FRANCE [FR]) 11 October 2018 (2018-10-11) * example 1 * ----- | 1-20 | TECHNICAL FIELDS SEARCHED (IPC) C08F C09J |

The present search report has been drawn up for all claims

1

| Place of search | Date of completion of the search | Examiner |
|---|---|---|
| The Hague | 4 May 2022 | Giani, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 30 6578

This annex lists the patent family members relating to the patent documents cited in the above-mentioned European search report. The members are as contained in the European Patent Office EDP file on
The European Patent Office is in no way liable for these particulars which are merely given for the purpose of information.

04-05-2022

| Patent document cited in search report | Publication date | Patent family member(s) | Publication date |
|---|---|---|---|
| EP 3880763 A1 | 22-09-2021 | BR 112021008097 A2 | 03-08-2021 |
| | | CA 3119209 A1 | 22-05-2021 |
| | | CL 2021001247 A1 | 29-10-2021 |
| | | CN 113056537 A | 29-06-2021 |
| | | EP 3653681 A1 | 20-05-2020 |
| | | EP 3880763 A1 | 22-09-2021 |
| | | TW 202024143 A | 01-07-2020 |
| | | US 2022119684 A1 | 21-04-2022 |
| | | WO 2020099459 A1 | 22-05-2020 |
| WO 2018184852 A1 | 11-10-2018 | BR 112019019719 A2 | 14-04-2020 |
| | | CA 3058030 A1 | 11-10-2018 |
| | | CL 2019002803 A1 | 21-02-2020 |
| | | CN 110536946 A | 03-12-2019 |
| | | EP 3385350 A1 | 10-10-2018 |
| | | EP 3607018 A1 | 12-02-2020 |
| | | US 2020148923 A1 | 14-05-2020 |
| | | WO 2018184852 A1 | 11-10-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019201696 A1
- US 20190390091 A1
- US 9518199 B2
- EP 1342762 B1
- WO 02092637 A
- WO 2018184852 A


### Non-patent literature cited in the description


- **TANGPAKDEE et al.** *Rubber Chem.Technol.,* 1998, vol. 71, 795-802
- Handbook of Polymer Reaction Engineering. WILEY-VCH Verlag GmbH & Co. KGaA, 2005, 759-762
- Polymer Handbook. John Wiley, 1999, vol. II, 2-69
- **HOLMBERG et al.** Surfactants and Polymers in Aqueous solutions. John Wiley & Sons, 2002
- *Adhesive Age,* July 1987, 19-23
- *Polym. Mater. Sci. Eng.,* 1989, vol. 61, 588-592
- *Encyclopedia of Polymer Science and Engineering,* 1987, vol. 8, 659
- Full Evaporation Head Space Gas Chromatographic Technique for the Determination of Residual Monomers and VOC in Polymer Dispersion. *International Journal of Polymer Analysis and Characterization,* 2003, vol. 8 (5